**Europäisches Patentamt**

**European Patent Office**

**Office européen des brevets**

(19)

(11) Veröffentlichungsnummer : **0 441 789 B1**

(12) # EUROPÄISCHE PATENTSCHRIFT

(45) Veröffentlichungstag der Patentschrift :
**06.05.92 Patentblatt 92/19**

(51) Int. Cl.$^5$ : **B01D 27/07, B01D 25/24**

(21) Anmeldenummer : **89909386.8**

(22) Anmeldetag : **22.08.89**

(86) Internationale Anmeldenummer :
**PCT/DE89/00544**

(87) Internationale Veröffentlichungsnummer :
**WO 90/05009 17.05.90 Gazette 90/11**

(54) **FLÜSSIGKEITSFILTER.**

(30) Priorität : **04.11.88 DE 3837423**

(43) Veröffentlichungstag der Anmeldung :
**21.08.91 Patentblatt 91/34**

(45) Bekanntmachung des Hinweises auf die
Patenterteilung :
**06.05.92 Patentblatt 92/19**

(84) Benannte Vertragsstaaten :
**DE FR GB IT**

(56) Entgegenhaltungen :
**EP-A-00 994 72**
**FR-A- 2 598 936**
**US-A- 3 265 213**

(73) Patentinhaber : **ROBERT BOSCH GMBH**
**Postfach 30 02 20**
**W-7000 Stuttgart 30 (DE)**

(72) Erfinder : **GLÄSSEL, Horst**
**Peter-Vischer-Str. 61**
**W-8540 Schwabach (DE)**
Erfinder : **JAUS, Reinhard**
**Paul-Schilder-Weg 3**
**W-8500 Nürnberg (DE)**
Erfinder : **HELLWIG, Egbert**
**Rummelsberger Weg 78**
**W-8501 Feucht (DE)**

(74) Vertreter : **Mayr, Eugen et al**
**Robert-Bosch-GmbH Robert-Bosch-Platz 1**
**W-7016 Gerlingen-Schillerhöhe (DE)**

EP 0 441 789 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Stand der Technik

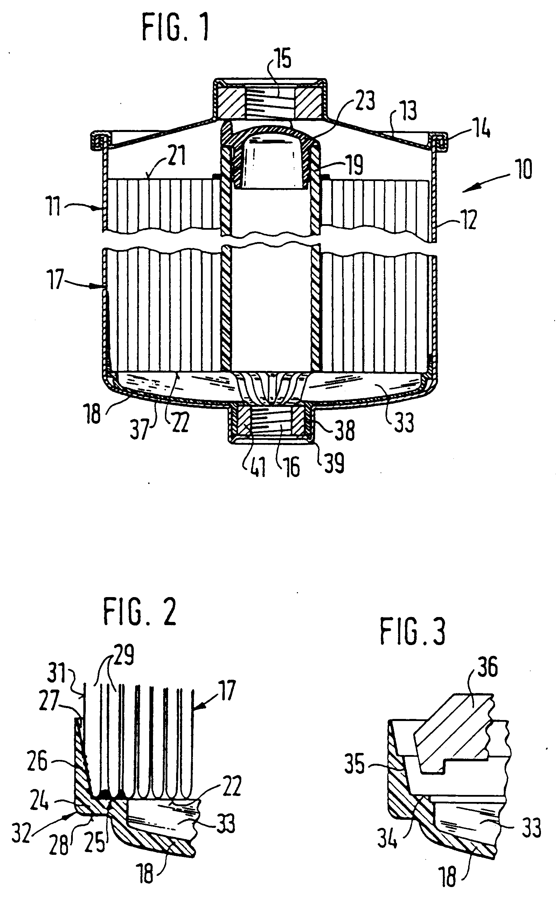

Die Erfindung geht aus von einem Flüssigkeitsfilter für Kraftstoffe nach der Gattung des Hauptanspruchs. Es ist schon ein solches Flüssigkeitsfilter aus der WO-A1 0 081 597, insbesondere Figur 2, bekannt, bei dem ein Wickelfilterelement in einem Gehäuse angeordnet ist und an seiner bodenseitigen, der Reinseite zugeordneten Stirnfläche eine trichterförmige Abdeckkappe aufweist. Diese Abdeckkappe leitet den aus der Stirnfläche austretenden, gereinigten Flüssigkeitsstrom um in das Mittelrohr. In der Abdeckkappe sind dabei nach innen gedrückte, radial verlaufende Rippen angeordnet, welche das Filterelement abstützen. Von Nachteil bei diesem Flüssigkeitsfilter ist, daß diese Abdeckkappe aus Metall besteht und einen trichterförmig aufgeweiteten, hülsenförmigen Randabschnitt aufweist, in den das Wickelfilterelement mit seiner Mantelfläche einfach eingepreßt ist. Mit diesem einfachen Eindrücken des Filterelements in die Abdeckkappe läßt sich im Bereich der zusammengedrückten Mantelfläche eine brauchbare Abdichtung zwischen der Schmutz- und der Reinseite des Filters nur bei Ölen mit wesentlich höheren Viskositäten als bei Benzin oder Dieselkraftstoffen erzielen. Zudem können beim Einpressen des Filterelements die äußeren Lagen des meist aus Papier bestehenden Wickels zu sehr zusammengedrückt werden oder auch beschädigt werden. Die Abdeckkappe aus Metall erfordert zudem erhöhten Aufwand hinsichtlich Material und Bearbeitung. Weiterhin führt der Abstand zwischen Abdeckkappe und dem Boden des Gehäuses nicht nur zu einer schlechten Raumausnutzung, sondern eignet sich auch schlecht für unterschiedliche Bauarten, bei denen am Boden des Gehäuses ein zusätzlicher Anschluß vorgesehan werden muß. Zudem baut das Filter durch die Montage vieler Einzelteile kostenintensiv.

Ferner ist aus der DE-PS 35 13 062 ein Flüssigkeitsfilter bekannt, in dessen Gehäuse ein Wickelfilterelement mit Hilfe einer Abdeckkappe angeordnet ist. Hier sind bereits das Wickelfilterelement und die Abdeckkappe in zweckmäßiger Weise flüssigkeitsdicht miteinander vormontiert. Nachteilig jedoch ist, daß die Abdeckkappe an der oberen Stirnseite des Wickelfilterelements angeordnet ist und diese Abdeckkappe mit einem Gehäusedeckel einen zusätzlichen Zulaufraum begrenzt. Ferner sind bei dieser Bauweise der Abdeckkappe eine Reihe von Dichtstellen zwischen Schmutz- und Reinseite erforderlich. Dabei ist eine dieser Dichtstellen zwischen der zylindrischen Mantelfläche des Wickelfilterelements und einer zugeordneten zylindrischen Innenwand an einem rohrförmigen Ansatz der Abdeckkappe ungünstig herstellbar, zumal keine axiale Festlegung dieser beiden Teile zueinander erfolgt. Zwischen Filtereinsatz und Filtergehäuse ist außerdem eine zusätzliche Verklebung erforderlich, um Schmutz- und Reinseite zu trennen.

Ferner ist aus der DE-PS 22 56 995 ein Flüssigkeitsfilter mit einem Wickelfilterelement bekannt, bei dem das vorgefertigte Filterelement in das bodenförmige Gehäuseunterteil eingesumpft wird. Hier weist das vorgefertigte Filterelement an seiner zylindrischen Mantelfläche einen vorgeformten, ringförmigen, mit Übermaß gegenüber der Innenwand des Gehäuses ausgestatteten Wulst aus Heißschmelzkleber auf, der beim Einpressen des Wickelfilterelements in ein erhitztes Gehäuseteil in seiner äußeren Randzone schmilzt und nach dem Erstarren eine dichte und feste Verbindung zwischen Schmutz- und Reinseite ergibt. Es kann nun von Nachteil sein, daß diese Verbindung zwischen Filterwickel und Gehäuse nur mit Hilfe eines klebstoffs möglich ist. Für eine einwandfreie Verbindung muß das becherförmige Gehäuseteil vor dem Einsumpfen des Wickelfilterelements absolut fettfrei gereinigt werden, was den Fertigungsaufwand erhöht. Bei einer Zwischenlagerung des Filterelements sind dessen beide Stirnseiten in ungeschützter Weise einer Verschmutzung ausgesetzt.

Vorteile der Erfindung

Das erfindungsgemäße Flüssigkeitsfilter mit den kennzeichnenden Merkmalen des Hauptanspruchs hat demgegenüber den Vorteil, daß sie eine klebstofffreie Verbindung zwischen dem Wickelfilterelement und dem Gehäuse ermöglicht, die bei relativ einfacher Bauweise eine sichere Abdichtung ermöglicht. Auch hier können das Filterelement und die Abdeckkappe vormontiert werden, wodurch es sich besonders für eine Massenfertigung eignet, bei der am Fertigungsband selbst nur noch eine kalte Montage erforderlich ist. Zudem eignet sich diese klebstofffreie Verbindung für Flüssigkeitsfilter von unterschiedlichen Bauarten, wie dies bei einem Leitungsfilter oder bei einem Boxfilter mit oder ohne Wasserablaßanschluß der Fall ist. Die Abdeckkappe läßt sich in kostengünstiger Weise am Wickelfilterelement befestigen und führt so zu einem leicht handhabbaren, lagerfähigen Zwischenprodukt, das sich besonders gut für eine automatische Bandfertigung eignet. Der vollständige Gehäuseinnenraum ist Schmutzseite, so daß nur eine geringe Waschqualität für das Gehäuse erforderlich ist. Das Wickelfilterelement ist außerdem beständig gegen Kraftstoffe mit hohem Methanol- bzw. Äthanolgehalt.

Durch die in den Unteransprüchen aufgeführten Maßnahmen sind vorteilhafte Weiterbildungen und Verbesserungen des im Hauptanspruch angegebenen Flüssigkeitsfilters möglich. Besonders vorteilhaft ist eine

EP 0 441 789 B1

Ausbildung nach den Ansprüchen 2 und 3, wodurch die Güte der Verbindungsstelle bei geringem Aufwand ein hohes Maß an Sicherheit erreicht. ferner ist eine Ausbildung der Abdeckkappe nach Anspruch 4 besonders zweckmäßig, wodurch sich neben guter Raumausnutzung und erhöhter Stabilität günstig gelegene Dichtungsstellen erreichen lassen. In vorteilhafter Weise kann gemäß Anspruch 5 neben der Kanalbildung auch die axiale Länge des Baukörpers festgelegt werden. In zueckmäßiger Weise können nach den Ansprüchen 8 bis 10 unterschiedliche Bauarten von Flüssigkeitsfiltern realisiert werden. Ferner erleichtert es die Herstellung des Zwischenprodukts, wenn gemäß Anspruch 11 an der Abdeckkappe eine geeignete Druckfläche vorgesehen wird. Äußerst vorteilhaft ist es, wenn das Wickelfilterelement in der Abdeckkappe mit Hilfe eines Heizelements-Schweißens nach Anspruch 14 hergestellt wird. Vorteilhaft läßt sich auch gemäß Anspruch 13 ein Fusselfangvlies einbauen.

Zeichnung

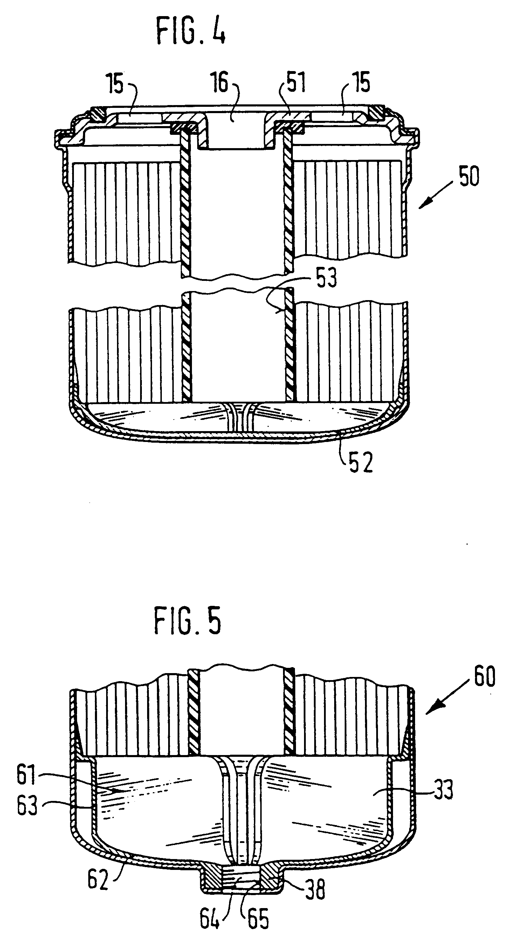

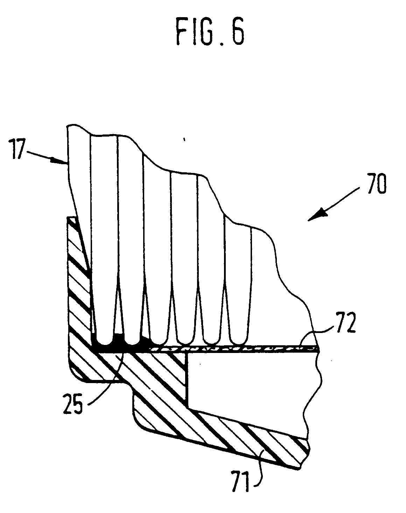

Drei Ausführungsbeispiele der Erfindung sind in der Zeichnung dargestellt und in der nachfolgenden Beschreibung näher erläutert. Es zeigen Figur 1 einen Längsschnitt durch ein erstes Flüssigkeitsfilter in vereinfachter Darstellung und in einer Bauart als Leitungsfilter, Figur 2 als Einzelheit die Verbindungsstelle des Wickelfilterelements mit der Abdeckkappe nach Figur 1, Figur 3 als Einzeilheit die Abdeckkappe vor dem Einschweißen des Filterelements, Figur 4 einen Längsschnitt durch ein zurites Flüssigkeitsfilter in einer Bauart als Boxfilter und Figur 5 einen Längsschnitt durch einen Teil eines dritten Flüssigkeitsfilters in einer Bauart als Boxfilter mit Wasserspeicherraum; Figur 6 zeigt von einem vierten Flüssigkeitsfilter als Einzelheit die Verbindungsstelle des Wickelelements mit der Abdeckkappe.

Beschreibung der Ausführungsbeispiele

Die Figur 1 zeigt ein erstes Flüssigkeitsfilter 10, dessen Gehäuse 11 im wesentlichen aus einem becherförmigen Gehäuseteil 12 und einem Deckel 13 besteht, die an einer Bördelstelle 14 dicht und fest miteinander verbunden sind.

Das Flüssigkeitsfilter 10 ist als Leitungsfilter ausgebildet, wozu es an entgegengesetzt liegenden Enden des Gehäuses 11 zwei Anschlüsse 15, 16 aufweist, von denen der erste Anschluß 15 im Deckel 13 als Einlaß für den Flüssigkeitsstrom dient, während der zweite Anschluß 16 am Boden des Gehäuseteils 12 als Auslaß benutzt wird.

Das Gehäuse 11 nimmt in seinem Innern ein axial durchströmtes Filterelement 17 auf, das mit einer bodenseitigen Abdeckkappe 18 dicht und fest verbunden ist. Das Filterelement 17 besteht in an sich bekannter Weise aus einer aufgewickelten Filtermaterialbahn mit V-förmigem Querschnitt, die unter Beifügung eines Klebers spiralig um ein Mittelrohr 19 gewickelt ist, so daß sich zwei spiralenförmig ineinandergreifende, jeweils zu einer Stirnseite 21 bzw. 22 hin offene Räume im Filterelement 17 bilden. Das Mittelrohr 19 ist an seinem, der Schmutzseite und damit der ersten Stirnseite 21 zugeordneten Ende durch einen Stopfen 23 verschlossen. Ein geschlossenes Mittelrohr aus Kunststoff ist ebenfalls verwendbar.

Wie die Figur 1 in Verbindung mit Figur 2 näher zeigt, besteht zwischen dem Filterelement 17 und der Abdeckkappe 18 eine klebstofffreie Varbindung, indem beide Teile miteinander verschweißt sind. Zu diesem Zweck besteht die Abdeckkappe 18 aus einem thermoplastischem Kunststoff, insbesondere Polyoxymethylen (POM). Die Abdeckkappe 18 weist im Bereich des äußeren Durchmessers einen senkrecht zur Längsachse des Flüssigkeitsfilters 10 verlaufenden Absatz 24 auf, an dem eine der zweiten Stirnseite 22 zugewandte, im wesentlichen horizontal verlaufende, ringförmige Schweißfläche 25 ausgebildet ist. Die Abdeckkappe 18 geht vom Absatr 24 in einen hülsenförmigen, axial verlaufenden Rand 26 über, der eine kegelförmig verlaufende Innenwand 27 aufweist. Ferner ist an der Abdeckkappe 18 entgegengesetzt zur Schweißfläche 25 eine Druckfläche 28 am Absatz 24 ausgebildet. Die Breite der ringförmigen Schweißfläche 25 ist vorzugsweise so groß gewählt, daß am Filterelement 17 von den beiden äußeren vollständigen Windungen 29 die zugehörigen Papiertaschen in der Schweißfläche 25 dicht befestigt sind. Ferner ist noch innerhalb des hülsenförmigen Randes 26 ein kurzer Abschnitt der Mantelfläche 31 des Filterelements 17 mit der kegeligen Innenwand 27 der Abdeckkappe 18 verschweißt. Das Filterelement 17 stützt sich auf der zweiten, reinseitigen Stirnseite 22 im Bereich zwischen den verschweißten Papiertaschen und zwischen dem Mittelrohr 19 auf Rippen 33 ab, die hier radial in der Abdeckkappe 18 angeordnet sind. Die Schweißfläche 25 und die Oberkanten der Rippen 33 liegen somit im wesentlichen in einer senkrecht zur Längsachse des Filters 10 verlaufenden Ebene, so daß die axiale Lage von Filterelement 17 zur Abdeckkappe 18 eindeutig festgelegt ist.

Die klebstofffreie Verbindung zwischen Filterelement 17 und Abdeckkappe 18 wird wie folgt hergestellt, wobei auf die Figur 3 näher Bezug genommen wird. Die Figur 3 zeigt in vergrößertem Maßstab einen Teil der Abdeckkappe 18 vor dem Schweißvorgang. Die aus thermoplastischem Kunststoff bestehende Abdeckkappe

EP 0 441 789 B1

18 weist im Bereich der Schweißfläche 25 und auch im Bereich der Innenwand Materialerhebungen 34, 35 auf, die mit Hilfe eines eingeführten Heizstempels 36 aufgeschmolzen werden. Nach dem Herausziehen des Heizstempels 36 aus der Abdeckkappe 18 wird in die noch aufgeschmolzenen Materialerhebungen 34, 35 das Filterelement 17 eingepreßt, bis seine Stirnseite 22 auf der Schweißfläche 25 und auf den Rippen 33 aufliegt. Der geschmolzene Kunststoff ergibt nach dem Erstarren eine dichte und feste Verbindungsstelle 32. Zum Gegendrücken beim Einpressen des Filterelements 17 ist an der Abdeckkappe 18 eine Druckfläche 28 angeordnet, so daß die auftretenden Kräfte unmittelbar im Bereich des Absatzes 20 ausgeglichen werden. Das vormontierte Filterelement 17 läßt sich leicht handhaben und eignet sich besonders zur weiteren Verarbeitung an universell verwendbaren Fertigungsbändern.

Wie Figur 1 ferner zeigt, ist die Abdeckkappe 18 in ihrer Form so ausgebildet, daß sie am Boden 37 des becherförmigen Gehäuseteils 12 in weiten Bereichen anliegt. Die Abdeckkappe 18 weist ferner einen zentrisch ausgebildeten Rohrstutzen 38 auf, mit dem sie in einen passenden, nach außen offenen Gehäusestutzen 39 des becherförmigen Gehäuseteils 12 ragt. In dem Rohrstutzen 38 aus Kunststoff ist eine metallische Gewindemutter 41 angeordnet, die bei der Herstellung der Abdeckkappe 37 im Spritzverfahren leicht eingesetzt werden kann.

Bei der Herstellung des Flüssigkeitsfilters 10 wird das vorgefertigte Filterelement 17 mit seiner angeschweißten Abdeckkappe 18 in das becherförmige Gehäuseteil 12 eingesetzt und danach das Gehäuseteil 12 mit dem Deckel 13 verbördelt. Der am ersten Anschluß 15 zugeführte, ungefilterte Kraftstoff fließt axial durch das Filterelement 17 und tritt gereinigt an der zweiten Stirnfläche 22 über in den von den Rippen 33 durchsetzten Raum der Abdeckkappe 18 und strömt weiter zum zweiten Anschluß 16. Ungefilterter Kraftstoff, der zwichen der Innenwand des becherförmigen Gehäuseteils 12 und dem Filterelement 17 hindurchsickert, kann nicht auf der Reinseite in die Abdeckkappe 18 gelangen, da beim beziehen der Gewindemutter 41 bei der Montage des Flüssigkeitsfilters 10 eine sichere Abdichtung zwischen der Geuindemutter 41 und dem Gehäuseteil 12 erfolgt. Durch diese klebstofffreie Verbindung 32 kann damit auch der Aufwand beim Reinigen des Gehäuseteils 12 vor dem Einbau des vormontierten Filterelements 17 niedrig gehalten werden, zumal ein eventueller Schmutzeintrag zwischen Abdeckkappe 18 und Gehäuseboden 37 hängenbleibt und nicht zur Reinseite im zweiten Anschluß 16 gelangen kann.

Die Figur 4 zeigt einen Längsschnitt durch ein zweites Flüssigkeitsfilter 50 in vereinfachter Darstellung, das sich von dem ersten Flüssigkeitsfilter 10 nach Figur 1 wie folgt unterscheidet, wobei für gleiche Bauelemente gleiche Bezugszeichen verwendet werden.

Das zweite Flüssigkeitsfilter 50 ist in einer Bauart als Boxfilter ausgebildet, wie es zur Kraftstoffiltrierung bei Dieselreihenpumpen verwendet wird. Bei ihm sind die beiden Anschlüsse 15 und 16 zusammen im Deckel 51 angeordnet, so daß ein Auslaß im Boden des Gehäuseteils 12 entfällt. Dementsprechend ist auch die Abdeckkappe 52 ohne zentrale Öffnung ausgebildet und hat einen durchgehenden Boden. Der im ersten Anschluß 15 zuströmende, ungereinigte Kraftstoff tritt an der zweiten Stirnseite 22 des Filterelements 17 gereinigt aus und wird von der Abdeckkappe 52 in einen Kanal 53 des Mittelrohrs 19 und weiter zum zweiten Anschluß 16 geleitet.

Die Figur 5 zeigt einen Längsschnitt durch einen Teil eines dritten Flüssigkeitsfilters 60, das sich von demjenigen nach Figur 4 wie folgt unterscheidet, wobei für gleiche Bauelemente gleiche Bezugszeichen verwendet werden. Das dritte Flüssigkeitsfilter 60 ist wie das zweite Flüssigkeitsfilter 50 in einer Bauart als Boxfilter ausgebildet, bei dem beide Anschlüsse 15, 16 im Deckel 51 liegen und hat zusätzlich einen Wasserspeicherraum 61. Dieser Wasserspeicherraum 61 läßt sich einfach dadurch erreichen, daß die Baulänge der Abdeckkappe 62 in axialer Richtung durch einen hülsenförmigen Abschnitt 63 verlängert ist und dementsprechend auch die Rippen 33 vergrößert sind. Ferner weist die Abdeckkappe 62 einen Wasserablaß 64 auf, wozu das Gewinde 65 zur Aufnahme einer geeigneten Wasserablaßschraube unmittelbar in dem aus Kunststoff bestehenden Rohrstutzen 38 angeordnet werden kann.

Die Funktion des dritten Flüssigkeitsfilters 60, das vor allem zum Reinigen von Kraftstoff für Dieselverteilerpumpen verwendet wird, entspricht weitgehend derjenigen des zweiten Flüssigkeitsfilters 50, wobei zusätzlich das abgeschiedene Wasser in dem Speicherraum 61 gesammelt und über den Wasserablaß 64 entleert werden kann.

Die Figur 6 zeigt von einem vierten Flüssigkeitsfilter 70 als Einzelheit die Verbindungsstelle zwischen Filterelement und Abdeckklappe 71, wobei sich das vierte Flüssigkeitsfilter 70 vom ersten Flüssigkeitsfilter 10 nach Figur 2 wie folgt unterscheidet, wobei für gleiche Teile gleiche Bezugszeichen verwendet werden.

Beim vierten Flüssigkeitsfilter 70 ist das Filterelement 17 lediglich in axialer Richtung in der Schweißfläche 25 eingeschmolzen, so daß dort keine radiale Abdichtung stattfindet. Dies erleichtert die Herstellung, da der Heizstempel 36 beim Einführen keine radial liegende Wand aufschmelzen muß. Ferner ist die Breite des Absatzes 24 und damit der ringförmigen Schweißfläche 25 größer gewählt und zusätzlich in der Ebene der Schweißfläche 25 ein Fusselfangfilter 72 aus Papier oder Vlies angeordnet, das beim Schweißvorgang mit seinem

4

äußeren Rand im gleichen Arbeitsgang mit eingeschmolzen wird.

Selbstverständlich ist es möglich, an den gezeigten Ausführungsformen Änderungen vorzunehmen, ohne vom Gedanken der Erfindung abzuweichen.

**Patentansprüche**

1. Flüssigkeitsfilter, insbesondere für Kraftstoffe mit in einem Gehäuse angeordneten Filterelement, bei dem ein bandförmiges, dünnes Filtermaterial spiralförmig um ein Mittelrohr aufgewickelt ist und zu entgegengesetzten Stirnseiten hin offene Räume bildet, die mit zwei voneinander getrennten Anschlüssen im Gehäuse für Ein- und Auslaß in Verbindung stehen und mit einer bodenseitigen Abdeckkappe, welche das Filterelement an seiner Mantelfläche ringförmig umgreift und dabei die zugeordnete Stirnseite mit einem der Reinseite zugeordneten Kanal verbindet, dadurch gekennzeichnet, daß die Abdeckkappe (18; 52; 62) aus thermoplastischem Kunststoff besteht und eine quer zur Längsachse des Filters (10) verlaufende, ringförmige Schweißfläche (25) aufweist, in der mindestens die äußerste, vollständige Windung (29) in der Stirnseite (22) des Filterelements (17) dicht mit der Abdeckkappe (18; 52; 62) verbunden ist.

2. Flüssigkeitsfilter nach Anspruch 1, dadurch gekennzeichnet, daß die Abdeckkappe (18; 52; 62) einen außen liegenden Absatz (24) aufweist, an dem die ringförmige Schweißfläche (25) angeordnet ist.

3. Flüssigkeitsfilter nach Anspruch 2, dadurch gekennzeichnet, daß die radiale Breite der Schweißfläche (25) wenigstens der Dicke von zwei bis drei Windungen (29) des Filterelements (17) entspricht.

4. Flüssigkeitsfilter nach Anspruch 1 oder 2, dadurch gekennzeichnet, daß die Abdeckkappe (18; 52; 62) eine im wesentlichen am Boden (37) des Gehäuses (11) anliegende Form aufweist.

5. Flüssigkeitsfilter nach einem oder mehreren der Ansprüche 1 bis 4, dadurch gekennzeichnet, daß die Abdeckkappe (18; 52; 62) die Stirnseite (22) des Filterelements (17) abstützende, insbesondere radial verlaufende Rippen (33) aufweist.

6. Flüssigkeitsfilter nach einem oder mehreren der Ansprüche 2 bis 5, dadurch gekennzeichnet, daß die Abdeckkappe (18; 52; 62) einen hülsenförmigen Rand (26) mit einer wenigstens teilweise kegelförmig verlaufenden Innenwand (27) aufweist.

7. Flüssigkeitsfilter nach Anspruch 5, oder 6, dadurch gekennzeichnet, daß die Schweißfläche (25) und die Oberkanten der Rippen (33) im wesentlichen in einer Ebene verlaufen.

8. Flüssigkeitsfilter nach einem oder mehreren der Ansprüche 1 bis 7, dadurch gekennzeichnet, daß die Abdeckkappe (18) zur Bildung eines Anschlusses (16) eines Leitungsfilters einen zentrisch ausgebildeten Rohrstutzen (38) aufweist, der in einen nach außen offenen Gehäusestutzen (39) ragt und insbesondere der Rohrstutzen (38) eine Gewindemutter (41) aufnimmt.

9. Flüssigkeitsfilter nach einem oder mehreren der Ansprüche 1 bis 7, dadurch gekennzeichnet, daß das Flüssigkeitsfilter (50; 60) als Boxfilter mit beiden Anschlüssen (15, 16) im Deckel (51) ausgebildet ist.

10. Flüssigkeitsfilter nach Anspruch 9, dadurch gekennzeichnet, daß die Abdeckkappe (62) einen hülsenförmigen Abschnitt (63) zur Bildung eines Wasserspeicherraums (61) aufweist, der in seiner axialen Ausdehnung von den Rippen (33) durchsetzt ist und mit einem Wasserablaß (64) in Verbindung steht.

11. Flüssigkeitsfilter nach einem der Ansprüche 2 bis 10, dadurch gekennzeichnet, daß die Abdeckkappe (18; 52; 62) außen eine entgegengesetzt zur Schweißfläche (25) liegende Druckfläche (28) aufweist.

12. Flüssigkeitsfilter nach einem oder mehreren der Ansprüche 6 bis 11, dadurch gekennzeichnet, daß die Innenwand (27) der Abdeckkappe (18; 52; 62) mit der Mantelfläche (31) des Filterelements (17) verschweißt ist.

13. Flüssigkeitsfilter nach einem oder mehreren der Ansprüche 1 bis 12, dadurch gekennzeichnet, daß in der Abdeckkappe (71) in Höhe der Schweißfläche (25) ein Fusselfangfilter (72) angeordnet ist, das insbesondere mit seinem äußeren Rand in die Schweißfläche (25) eingeschmolzen ist.

14. Verfahren zur Herstellung des Filters nach einem der Ansprüche 1 bis 13, dadurch gekennzeichnet, daß in die Abdeckkappe (18; 52; 62) ein Heizstempel (36) eingeführt wird, der den thermoplastischen Kunststoff in der Schweißfläche (25) aufschmelzt, wonach in den geschmolzenen Kunststoff das Filterelement (17) mit seinen äußersten Windungen (29) eingedrückt wird und eine feste, dichte Verbindung nach dem Erstarren bildet.

**Claims**

1. Fluid filter, especially for fuels, with a filter element arranged in a housing, in which a band-shaped thin filter material is wound spirally round a middle tube and forms spaces which are open towards opposite end faces and which are connected to two connections separated from one another and located in the housing for the inlet and outlet, and with a bottom cover cap which engages annularly round the filter element on its outer surface and which thereby connects the associated end face to a channel assigned to the clean side, characterised in that the cover cap (18; 52; 62) consists of thermoplastic and has an annular welding surface (25) which extends transversely relative to the longitudinal axis of the filter (10) and in which at least the outermost complete turn (29) is connected sealingly to the cover cap (18; 52; 62) in the end face (22) of the filter element (17).

2. Fluid filter according to Claim 1, characterised in that the cover cap (18; 52; 62) has an outer step (24), on which the annular welding surface (25) is arranged.

3. Fluid filter according to Claim 2, characterised in that the radial width of the welding surface (25) corresponds at least to the thickness of two to three turns (29) of the filter element (17).

4. Fluid filter according to Claim 1 or 2, characterised in that the cover cap (18; 52; 62) has a shape bearing essentially against the bottom (37) of the housing (11).

5. Fluid filter according to one or more of Claims 1 to 4, characterised in that the cover cap (18; 52; 62) has especially radial ribs (33) supporting the end face (22) of the filter element (17).

6. Fluid filter according to one or more of Claims 2 to 5, characterised in that the cover cap (18; 52; 62) has a sleeve-shaped edge (26) with an at least partially conical inner wall (27).

7. Fluid filter according to Claim 5 or 6, characterised in that the welding surface (25) and the top edges of the ribs (33) extend essentially in one plane.

8. Fluid filter according to one or more of Claims 1 to 7, characterised in that, to form a connection (16) of a conduit filter, the cover cap (18) has a centrally designed tubular connection piece (38) which projects into an outwardly open housing connection piece (39), and the tubular connection piece (38) particularly receives a threaded nut (41).

9. Fluid filter according to one or more of Claims 1 to 7, characterised in that the fluid filter (50; 60) is designed as a box filter with the two connections (15, 16) in the lid (51).

10. Fluid filter according to Claim 9, characterised in that the cover cap (62) has a sleeve-shaped portion (63) for forming a water storage space (61), through the axial extension of which pass the ribs (33) and which is connected to a water outlet (64).

11. Fluid filter according to one of Claims 2 to 10, characterised in that the cover cap (18; 52; 62) has on the outside a pressure surface (28) located opposite the welding surface (25).

12. Fluid filter according to one or more of Claims 6 to 11, characterised in that the inner wall (27) of the cover cap (18; 52; 62) is welded to the outer surface (31) of the filter element (17).

13. Fluid filter according to one or more of Claims 1 to 12, characterised in that arranged in the cover cap (71) level with the welding surface (25) is a napped trap filter (72) which is melted especially with its outer edge into the welding surface (25).

14. Process for producing the filter according to one of Claims 1 to 13, characterised in that a heating punch (36) is introduced into the cover cap (18; 52; 62) and melts the thermoplastic in the welding surface (25), after which the filter element (17) is pressed with its outermost turns (29) into the melted plastic and forms a firm sealing connection after solidification.

**Revendications**

1. Filtre à liquides, en particulier pour carburants avec un élément de filtre disposé dans un boîtier, élément dans lequel est enroulé autour d'un tuyau central un matériau de filtration en forme de bande, mince, formant une spirale, et qui forme à des deux extrémités frontales des espaces ouverts, qui sont en liaison avec deux raccords séparés l'un de l'autre dans le boîtier pour l'admission et l'évacuation et avec une chape, du côté du fond, qui enserre l'élément de filtre sur sa surface périphérique et ce faisant relie les faces frontales correspondantes à un canal associé au côté propre, filtre à liquides caractérisé en ce que la chape (18 ; 52 ; 62) est réalisée en une matière synthétique thermoplastique et présente une surface de soudage (25) s'étendant transversalement à l'axe longitudinal du filtre (10), de forme annulaire, dans laquelle au moins l'enroulement le plus extérieur, complet (29) est relié dans la face frontale (22) de l'élément de filtre (17) de façon étanche à la chape (18 ; 52 ; 62).

2. Filtre à liquides selon la revendication 1, caractérisé en ce que la chape (18 ; 52 ; 62) présente un appendice (24) situé extérieurement, sur lequel est disposée la surface de soudage (25) de forme annulaire.

3. Filtre à liquides selon la revendication 2, caractérisé en ce que la largeur radiale de la surface de soudage (25) correspond au moins à l'épaisseur de deux à trois enroulements (29) de l'élément de filtre (17).

4. Filtre à liquides selon la revendication 1 ou 2, caractérisé en ce que la chape (18 ; 52 ; 62) présente une forme reposant essentiellement sur le fond (37) du boîtier (11).

5. Filtre à liquides selon une ou plusieurs des revendications 1 à 4, caractérisé en ce que la chape (18 ; 52 ; 62) présente des nervures (33) s'appuyant sur la face frontale de l'élément de filtre (17), en particulier s'étendant radialement.

6. filtre à liquides selon l'une ou plusieurs des revendications 2 à 5, caractérisé en ce que la chape (18 ; 52 ; 62) présente un bord (26) en forme de manchon avec une paroi intérieure (27) s'étendant au moins en partie sous une forme conique.

7. Filtre à liquides selon la revendication 5 ou 6, caractérisé en ce que la surface de soudage (25) et les arêtes supérieures es des nervures (33) s'étendent essentiellement dans un plan.

8. Filtre à liquides selon une ou plusieurs des revendications 1 à 7, caractérisé en ce que la chape (18) présente pour la formation d'un raccord (16) d'un filtre de canalisation un ajutage tubulaire (38) réalisé au centre qui pénètre dans un ajutage de carter (39) ouvert vers l'extérieur, et en ce qu'en particulier l'ajutage tubulaire (38) reçoit un écrou fileté (41).

9. Filtre à liquides selon une ou plusieurs des revendications 1 à 7, caractérisé en ce que le filtre à liquides (50 ; 60) est constitué comme un filtre à boîtier avec deux raccords (15, 16) dans le couvercle (51).

10. Filtre à liquides selon la revendication 9, caractérisé en ce que la chape (62) présente une section (63) en forme de manchon pour la formation d'un réservoir d'eau (61) qui est entrecoupé par les nervures (33) dans son extension axiale et est en liaison avec une évacuation d'eau (64).

11. Filtre à liquides selon l'une des revendications 2 à 10, caractérisé en ce que la chape (18 ; 52 ; 62) présente extérieurement une surface de compression (28) se trouvant à l'opposé de la surface de soudage (25).

12. Filtre à liquides selon une ou plusieurs des revendications 6 à 11, caractérisé en ce que la paroi intérieure (27) de la chape (18 ; 52 ; 62) est soudée à l'enveloppe (31) de l'élément de filtre (17).

13. Filtre à liquides selon une ou plusieurs des revendications 1 à 12, caractérisé en ce que dans la chape (71) à la hauteur de la surface de soudage (25) est disposé un filtre (72) d'interception pelucheux qui est en particulier réuni par fusion par son bord extérieur à la surface de soudage (25).

14. Procédé pour la fabrication du filtre selon l'une des revendications 1 à 13, caractérisé en ce que dans la chape (18 ; 52 ; 62) est introduit un poinçon chauffant (36) qui fond la matière synthétique thermoplastique dans la surface de soudage (25), après quoi l'élément de filtre (17) est enfoncé par pression dans la matière plastique fondue par des enroulements les plus externes et forme une liaison fixe, étanche après le figeage.

## FIG. 1

## FIG. 2

## FIG. 3

# FIG. 4

# FIG. 5

# FIG.6